# EUROPEAN PATENT SPECIFICATION

(11) **EP 3 875 002 B1**
(45) Date of publication and mention of the grant of the patent: **13.09.2023**
(21) Application number: 18935993.8
(22) Date of filing: 01.11.2018
(51) Int. Cl.: A47J 31/36

(54) **BREWING APPARATUS AND BEVERAGE PREPARATION DEVICE**
BRÜHVORRICHTUNG UND GETRÄNKEZUBEREITUNGSVORRICHTUNG
APPAREIL D'INFUSION ET DISPOSITIF DE PRÉPARATION DE BOISSON

(30) Priority: 31.10.2018 CN 201811290591
(43) Date of publication of application: 08.09.2021
(73) Proprietor: CINO Technology (shenzhen) Limited, Shenzhen, Guangdong 518104 (CN)
(72) Inventor: FENG, Tingquan, Shenzhen, Guangdong 518104 (CN); LUO, Changhai, Shenzen, Guangdong 518104 (CN)
(74) Representative: Heimdal, Pär
(86) International application number: PCT/CN2018/113486
(87) International publication number: WO 2020/087458

(56) References cited:
- EP-A1- 2 803 301
- WO-A1-2016/170174
- CN-A- 103 271 651
- CN-A- 105 852 643
- CN-A- 106 264 156
- CN-A- 106 264 156
- CN-A- 106 580 092
- CN-A- 106 618 217
- CN-A- 107 969 110
- CN-U- 202 619 402
- CN-U- 203 802 284
- DE-U1-202012 012 851

## Description

### TECHNICAL FIELD

The present invention relates to the technical field of beverage preparation machines, and in particular, relates to a brewing device and a beverage preparation machine.

### BACKGROUND

Coffee capsules are a pre-packaged form of ground coffee powder. During preparation of the coffee capsules, ground coffee powder that is subjected to special treatment is sealed in an aluminum case space similar to "fruit gels", and meanwhile non-toxic inert gas is filled into the coffee capsules, which exerts the effect of prolonging preservation and further sterilization, and may prevent common coffee beans or coffee powder from being in contact with the air and suffering from souring, oxidation or the like.

In a brewing device of a beverage preparation machine commercially available, a beverage package is placed into a receiving chamber, a connecting rod mechanism drives a piercing means to pierce the beverage package, boiling water is filled from pierced apertures, and then the brewing of the beverage is completed. The above operations are simple, but the defect lies in that in the process of placing the beverage package into the receiving chamber, the brewing device may be prone to jam due to the misaligned beverage package and thus beverage leakage may be caused. Document EP 2803301 A1 concerns a beverage package dropping structure in a beverage extraction apparatus. The document relates to a capsules rejection mechanism in a beverage extraction device, which comprises a housing, a first frame, a second frame, two jaws, a pushing plate, an elastic element and two guiding plates.

### SUMMARY

Embodiments of the present invention are mainly intended to provide a brewing device and a beverage preparation machine.

One technical solution employed by the present invention is to provide a brewing device for a beverage preparation machine. The brewing device includes:
a first mounting plate;
a second mounting plate;
a fixing assembly, fixed between the first mounting plate and the second mounting plate, the fixing assembly comprising a fixing member and the fixing member defining a receiving chamber configured to receive a beverage package;
a sliding member, mounted between the first mounting plate and the second mounting plate, the sliding member being slidable relative to the fixing member, the sliding member defining a first connecting hole;
a driving assembly, connected to the first mounting plate and the second mounting plate, and the sliding member respectively, and configured to drive the sliding member to slide; and
a locking member, including a main portion and a first connecting bar, and a first elastic sheet; wherein the main portion is provided with a groove configured to lock the beverage package, one end of the first connecting bar is fixed to the main portion, one end of the first elastic sheet is fixedly connected to the first connecting bar and the other end of the first elastic sheet is suspended, the other end of the first elastic sheet is provided with a first block and a second block, and the first connecting bar and the first elastic sheet pass through the first connecting hole; when the brewing device is in a first position state, the first connecting hole is positioned between the first block and the second block, a spacing is defined between the main portion and the sliding member, and a spacing is defined between the main portion and the fixing member; when the brewing device is in a second position state, the first connecting hole is positioned between the first block and the second block, a spacing is defined between the main portion and the sliding member, and the main portion abuts against the fixing member; and when the brewing device is in the third position state, the first connecting hole is positioned between the first block and the main portion, the main portion abuts against the sliding member, and the main portion abuts against the fixing member.

In some embodiments, the fixing assembly further includes a pushing plate; wherein the pushing plate is arranged in the receiving chamber and positioned at a bottom of the receiving chamber, and configured to push used beverage package out of the receiving chamber.

In some embodiments, one end of the sliding member is provided with an abutting portion matching with the receiving chamber; wherein the abutting portion includes a plurality of lancets configured to pierce the beverage package, a water outlet, and a sealing portion configured to seal the receiving chamber, the sealing portion being in an annular shape and surrounding the plurality of lancets.

In some other embodiments, a middle portion of the first mounting plate defines a first sliding groove; a middle portion of the second mounting plate defines a second sliding groove; and the other end of the sliding member is provided with a connecting shaft; wherein two connecting shafts are provided and respectively arranged on left and right sides of the sliding member, the two connecting shafts are respectively embedded into the first sliding groove and the second sliding groove, and the connecting shaft is slidable in the first sliding groove or the second sliding groove.

In some embodiments, a side of the first block facing towards the main portion and a side of the first block distal from the main portion are both provided with a bevel surface, and a side of the second block distal from the main portion is provided with a bevel surface.

In some embodiments, the sliding member further defines a second connecting hole; and the locking member further includes a second connecting bar and a second elastic sheet; wherein one end of the second connecting bar is fixed to the main portion, one end of the second elastic sheet is fixedly connected to the second connecting bar and the other end of the second elastic sheet is suspended, the other end of the second elastic sheet is provided with a third block and a fourth block, and the second connecting bar and the second elastic sheet pass through the second connecting hole; when the brewing device is in the first position state, the first connecting hole is positioned between the third block and the fourth block, a spacing is defined between the main portion and the sliding member, and a spacing is defined between the main portion and the fixing member; when the brewing device is in the second position state, the first connecting hole is positioned between the third block and the fourth block, a spacing is defined between the main portion and the sliding member, and the main portion abuts against the fixing member; and when the brewing device is in the third position state, the second connecting hole is positioned between the third block and the main portion, the main portion abuts against the sliding member, and the main portion abuts against the fixing member.

In some embodiments, the other end of the second elastic sheet is provided with a third block and a fourth block; wherein a side of the third block facing towards the main portion and a side of the third block distal from the main portion are both provided with a bevel surface, and a side of the fourth block distal from the main portion is provided with a bevel surface.

In some embodiments, the driving assembly includes a handle and a connecting rod mechanism; wherein the connecting rod mechanism is connected between the handle and the sliding member, wherein when being swung, the handle drives, by the connecting rod mechanism, the sliding member to undergo a linear reciprocating movement.

In some embodiments, the connecting rod mechanism includes a first connecting rod, a second connecting rod, a third connecting rod, and an elastic member; wherein one end of the first connecting rod is hinged to a first hinge point and the other end of the first connecting rod is hinged to one end of the second connecting rod, a middle portion of the second connecting rod is hinged to the first mounting plate and the other end of the second connecting rod is hinged to one end of the third connecting rod, the other end of the third connecting rod is hinged to a connecting shaft on the sliding member, and one end of the elastic member is fixedly connected to the first connecting rod and the other end of the elastic member is fixedly connected to the second connecting rod.

Another technical solution employed by the present invention is to provide a beverage preparation machine. The beverage preparation machine includes the above described brewing device.

The embodiments of the present invention achieve the following beneficial effects: Different from the related art, in the embodiments of the present invention, the brewing device includes a locking member. The locking member includes a main portion, a first connecting bar, and a first elastic sheet; wherein one end of the first connecting bar is fixed to the main portion, one end of the first elastic sheet is fixedly connected to the first connecting bar and the other end of the first elastic sheet is suspended, the other end of the first elastic sheet is provided with a first block and a second block, and the first connecting bar and the first elastic sheet pass through the first connecting hole. With such configurations, the first block and the second block may enable the brewing device to be in a first position state, a second position state, and a third position state. In this way, it may be ensured that the beverage package accurately enters the receiving chamber, such that, in the process of brewing beverage, the case where the brewing device is jammed due to misalignment of the beverage package and thus beverage leakage is caused is avoided.

### BRIEF DESCRIPTION OF THE DRAWINGS

FIG. 1 is a three-dimensional structural view of a brewing device according to an embodiment of the present invention;
FIG. 2 is a three-dimensional structural view of a fixing assembly and a locking member in the brewing device according to an embodiment of the present invention;
FIG. 3 is a three-dimensional structural view of a sliding member in the brewing device according to an embodiment of the present invention;
FIG. 4 is a three-dimensional structural view of a brewing device according to an embodiment of the present invention, wherein the brewing device is in a first position state;
FIG. 5 is a three-dimensional structural view of a brewing device according to an embodiment of the present invention, wherein the brewing device is in a second position state;
FIG. 6 is a three-dimensional structural view of a brewing device according to an embodiment of the present invention, wherein the brewing device is in a third position state; and
FIG. 7 is a three-dimensional structural view of a brewing device according to an embodiment of the present invention, wherein the brewing device is in a fourth position state.

### DETAILED DESCRIPTION

For better understanding of the present invention, the present invention is described in detail with reference to attached drawings and specific embodiments. It should be noted that, when an element is defined as "being secured or fixed to" another element, the element may be directly positioned on the element or one or more centered elements may be present therebetween. When an element is defined as "being connected or coupled to" another element, the element may be directly connected or coupled to the element or one or more centered elements may be present therebetween. As used herein, the terms "vertical", "horizontal", "left", "right", and similar expressions are for illustration purposes.

Unless otherwise defined, all technical and scientific terms used herein denote the meaning as commonly understood by a person skilled in the art throughout the specification. Additionally, the terms used in the specification of the present invention are merely for description the embodiments of the present invention, but are not intended to limit the present invention. As used herein, the term "and/or" used in the specification includes any and all combinations of one or more of the associated listed items.

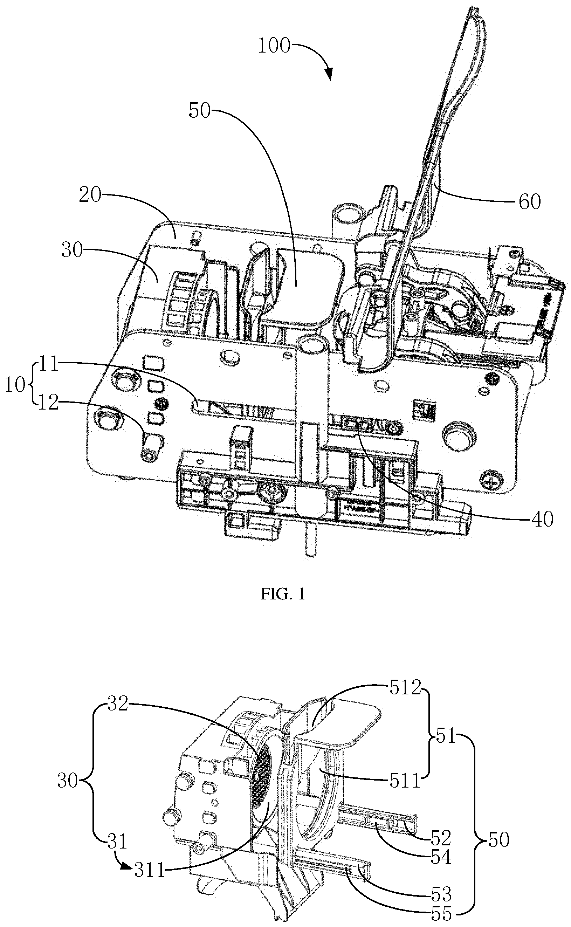

An embodiment of the present invention provides a brewing device applied to a beverage preparation machine. Referring to FIG. 1, a brewing device 100 applied to the beverage preparation machine according to an embodiment of the present invention includes a first mounting plate 10, a second mounting plate 20, a fixing assembly 30, a sliding member 40, a locking member 50, and a driving assembly 60. A space configured to receive the fixing assembly 30, the sliding member 40, and the locking member 50 is defined between the first mounting plate 10 and the second mounting plate 20. The fixing assembly 30 is fixedly mounted between the first mounting plate 10 and the second mounting plate 20. The sliding member 40 is movably mounted between the first mounting member 10 and the second mounting member 20, and slidable relative to the fixing assembly 30 along the first mounting member 10 and the second member 20. The locking member 50 is mounted between the first mounting plate 10 and the second mounting plate 20, and positioned between the fixing assembly 30 and the sliding member 40.

Specifically, one end of the first mounting plate 10 is fixedly connected to the fixing assembly 30, a middle portion of the first mounting plate 10 defines a first sliding groove 11, and the other end of the first mounting plate 10 defines a first mounting hole 12.

One end of the second mounting plate 20 is fixedly connected to the fixing assembly 30, a middle portion of the second mounting plate 20 defines a second sliding groove, and the other end of the second mounting plate 20 defines a second mounting hole.

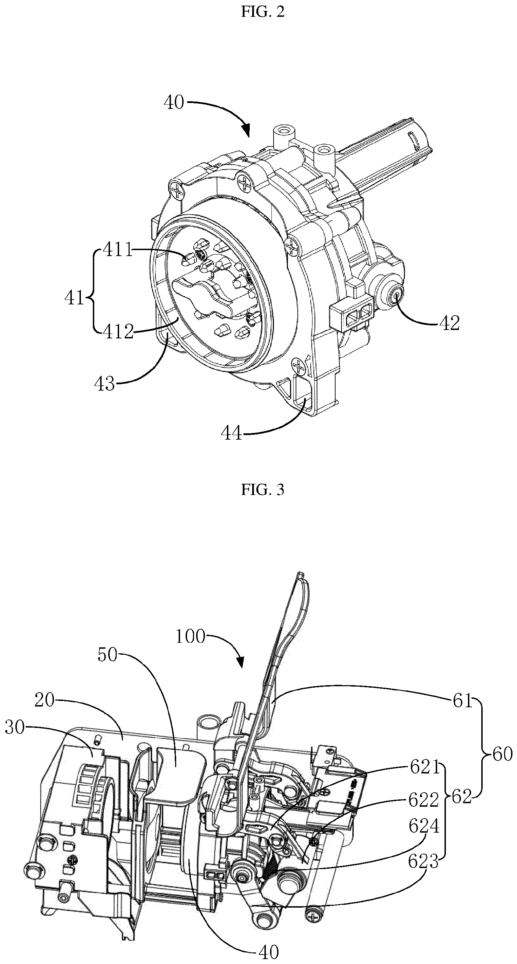

As illustrated in FIG. 2, the fixing assembly 30 includes a fixing member 31 and a pushing plate 32. A surface of the fixing member 31 defines a receiving chamber 311. The receiving chamber 311 is configured to receive a beverage package. The pushing plate 32 is arranged in the receiving chamber 311 and positioned at a bottom of the receiving chamber 311, and configured to push used beverage package out of the receiving chamber 311. The fixing member 31 further includes a first side face and a second side face, wherein the first side face and the second side face are respectively arranged on both sides of the receiving chamber 311. The first side face is fixedly connected to one end of the first mounting plate 10, and the second side face is fixedly connected to one end of the second mounting plate 20.

As illustrated in FIG. 3, one end of the sliding member 40 is provided with an abutting portion 41 matching with the receiving chamber 311. The abutting portion 41 includes a plurality of lancets 411 configured to pierce the beverage package, a water outlet, and a sealing portion 412 configured to seal the receiving chamber 311. The sealing portion 412 is of a circular shape, and surrounds the plurality of lancets 411. The other end of the sliding member 40 is provided with a connecting shaft 42. Two connecting shafts 42 are provided and respectively arranged on left and right sides of the sliding member 40. The two connecting shafts 42 are respectively embedded into the first sliding groove 11 and the second sliding groove 21, and the connecting shaft 42 is slidable in the first sliding groove 11 or the second sliding groove 21.

The left and right sides of the sliding member 40 respectively define a first connecting hole 43 and a second connecting hole 44, wherein the first connecting hole 43 and the second connecting hole 44 are positioned on lower left and right sides of the abutting portion 41. The first connecting hole 43 and the second connecting hole 44 are arranged along a movement direction of the sliding member 40. That is, orientations of the first connecting hole 43 and the second connecting hole 44 are consistent with the movement direction of the sliding member 40.

Still referring to FIG. 2, the locking member 50 includes a main portion 51, a first connecting bar 52, and a second connecting bar 53. The main portion 51 is of a ring shape, and a middle portion of the main portion 51 defines a through hole 511. The shape of the through hole 511 is approximately the same as the shape of the cross-section of the beverage package in the locking member 50, and the area of the through hole 511 is slightly less than the area of the cross-section of the beverage package. The through hole 511 is aligned with the receiving chamber 311.

A groove 512 is arranged in the main portion 51 along a central line direction perpendicular to the through hole 511, wherein the groove 512 is configured to lock the beverage package. One end of the first connecting bar 52 is fixedly connected to the main portion 51, and is perpendicular to the main portion 51. One end of the second connecting bar 53 is fixedly connected to the main portion 51, and is perpendicular to the main portion 51.

The first connecting bar 52 and the second connecting bar 53 are positioned on lower left and right sides of the through hole 511. The sides of the first connecting bar 52 and the second connecting bar 53 opposite to each other are respectively provided with a first elastic sheet 54 and a second elastic sheet 55.

The first elastic sheet 54 and the first connecting bar 52 are arranged in approximately the same direction, and an included angle is defined between the first elastic sheet 54 and the first connecting bar 52. One end of the first elastic sheet 54 is fixedly connected to one end of the first connecting bar 52, and the other end of the first elastic sheet 54 is cocked and suspended. The other end of the first elastic sheet 54 is provided with a first block and a second block. A side of the first block facing towards the main portion 51 and a side of the first block distal from the main portion 51 are both provided with a bevel surface. A side of the second block distal from the main portion 51 is provided with a bevel surface.

The first connecting bar 52 and the first elastic sheet 54 collaboratively pass through the first connecting hole 43.

The second elastic sheet 55 and the second connecting bar 53 are arranged in approximately the same direction, and an included angle is defined between the second elastic sheet 55 and the second connecting bar 53. One end of the second elastic sheet 55 is fixedly connected to one end of the second connecting bar 53, and the other end of the second elastic sheet 55 is cocked and suspended. The other end of the second elastic sheet 55 is provided with a third block and a fourth block. A side of the third block facing towards the main portion 51 and a side of the third block distal from the main portion 51 are both provided with a bevel surface. A side of the fourth block distal from the main portion 51 is provided with a bevel surface.

The second connecting bar 53 and the second elastic sheet 55 collaboratively pass through the second connecting hole 44.

It should be understood that in some other embodiments, the sliding member 40 may define only one first connecting hole; and correspondingly, the locking member 50 may include only one first connecting rod matching with the first connecting hole. A side face of the first connecting rod is provided with a first elastic sheet.

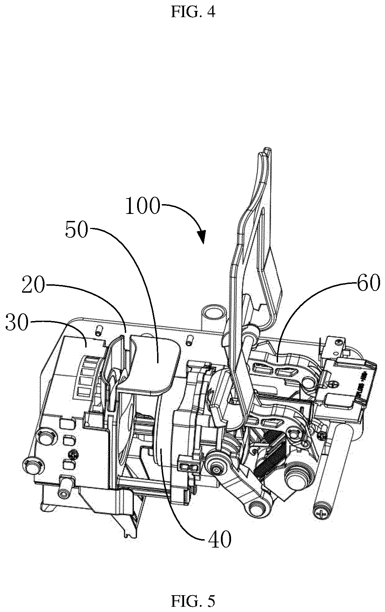

As illustrated in FIG. 4, the driving assembly 60 includes a handle 61 and a connecting rod mechanism 62. The connecting rod mechanism 62 is connected between the handle 61 and the sliding member 40; wherein when being swung, the handle 61 drives, by the connecting rod mechanism 62, the sliding member 40 to undergo a linear reciprocating movement.

The handle 61 is approximately of a U shaped, and two ends of the handle 61 are respectively hinged to the first mounting plate 10 and the second mounting plate 20. The two ends of the handle 61 are respectively provided with a first hinge point and a second hinge point.

Two connecting rod mechanisms 62 are provided, and symmetrically arranged on left and right sides of the sliding member 40.

One connecting rod mechanism 62 includes a first connecting rod 621, a second connecting rod 622, a third connecting rod 623, and an elastic member 624. One end of the first connecting rod 621 is hinged to the first hinge point and the other end of the first connecting rod 621 is hinged to one end of the second connecting rod 622, a middle portion of the second connecting rod 622 is hinged to the first mounting plate 10 and the other end of the second connecting rod 622 is hinged to one end of the third connecting rod 623, and the other end of the third connecting rod 623 is hinged to one of the two connecting shafts 42 on the sliding member 40. One end of the elastic member 624 is fixedly connected to the first connecting rod and the other end of the elastic member 624 is fixedly connected to the second connecting rod 622.

In this embodiment, the elastic member 624 may be specifically a spring, an elastic belt, or the like.

It may be understood that the elastic member 624 is configured to provide an elastic force for restoring the connecting rod mechanism 62 to an initial state. The specific position of the elastic member 624 may be changed according to actual needs. In some other embodiments, one end of the elastic member 624 is fixedly connected to the first connecting rod 621, and the other end of the elastic member 624 is fixedly connected to the third connecting rod 623. In some other embodiments, one end of the elastic member 624 is fixedly connected to the second connecting rod 622, and the other end of the elastic member 624 is fixedly connected to the third connecting rod 623.

The other connecting rod mechanism 62 includes a first connecting rod 621, a second connecting rod 622, a third connecting rod 623, and an elastic member 624. One end of the first connecting rod 621 is hinged to the second hinge point and the other end of the first connecting rod 621 is hinged to one end of the second connecting rod 622, a middle portion of the second connecting rod 622 is hinged to the second mounting plate 20 and the other end of the second connecting rod 622 is hinged to one end of the third connecting rod 623, and the other end of the third connecting rod 623 is hinged to another connecting shaft 42 on the sliding member 40. One end of the elastic member 624 is fixedly connected to the first connecting rod and the other end of the elastic member 624 is fixedly connected to the second connecting rod 622.

In this embodiment, the elastic member 624 may be specifically a spring, an elastic belt, or the like.

It may be understood that the elastic member 624 is configured to provide an elastic force for restoring the connecting rod mechanism 62 to an initial state. The specific position of the elastic member 624 may be changed according to actual needs. In some other embodiments, one end of the elastic member 624 is fixedly connected to the first connecting rod 621, and the other end of the elastic member 624 is fixedly connected to the third connecting rod 623. In some other embodiments, one end of the elastic member 624 is fixedly connected to the second connecting rod 622, and the other end of the elastic member 624 is fixedly connected to the third connecting rod 623.

It may be understood that the connecting rod mechanism 62 according to the embodiment of the present invention is configured to convert a rotation movement of the handle 61 relative to the first mounting plate 10 and the second mounting plate 20 to a linear movement of the sliding member 40, and thus the specific structure of the connecting rod mechanism 62 is not limited herein. In some other embodiments, the connecting rod mechanism 62 includes a first connecting rod, a second connecting rod, a third connecting rod, a fourth connecting rod, a fifth connecting rod, and an elastic member. One end of the first connecting rod is hinged to the handle 61, the other end of the first connecting rod is hinged to one end of the second connecting rod, a middle portion of the second connecting rod is hinged to the first mounting plate 10 or the second mounting plate 20, the other end of the second connecting rod is hinged to one end of the third connecting rod, the other end of the third connecting rod is hinged to one end of the fourth connecting rod, a middle portion of the fourth connecting rod is hinged to the first mounting plate 10 or the second mounting plate 20, the other end of the fourth connecting rod is hinged to one end of the fifth connecting rod, and the other end of the fifth connecting rod is hinged to the connecting shaft 42. One end of the elastic member is fixedly connected to the first connecting rod and the other end of the elastic member is fixedly connected to the third connecting rod.

The operating principles of the brewing device 100 are briefly described hereinafter.

The locking member 50 is mounted on the sliding member 40, and the sliding member 40 may drive the locking member 50 to slide as well. During the process of brewing beverage by the brewing device 100, the brewing device 100 may operate in four position states, that is, a first position state, a second position state, a third position state, and a fourth position state. As illustrated in FIG. 4, when the brewing device 100 is in the first position state, the first connecting hole 43 is positioned between the first block and the second block, and the second connecting hole 44 is positioned between the third block and the fourth block. In this case, a spacing is defined between the main portion 51 and the sliding member 40, and a spacing is defined between the main portion 51 and the fixing member 31.

Firstly, the beverage package is placed on the locking member 50, and the beverage package is fixed to the locking member 50 by the groove 512. Secondly, by pressing the other end of the handle 61, the connecting rod mechanism 62 may drive the sliding member 40 to move towards the fixing member 31. In this case, the locking member 50 synchronously moves with the sliding member 40. During the process of the movement, the spacing between the locking member 50 and the sliding member 40 remains unchanged, and the spacing between the locking member 50 and the fixing member 31 gradually decreases. The first connecting hole 43 is positioned between the first block and the second block, and the second connecting hole 44 is positioned between the third block and the fourth block.

When the main portion 51 abuts against the fixing member 31, the through hole 511 is aligned with the receiving chamber 311. In this case, the brewing device 100 transitions from the first position state to the second position state. The spacing between the locking member 50 and the sliding member 40 remains unchanged, and the spacing between the locking member 50 and the fixing member 31 is 0. The first connecting hole 43 is positioned between the first block and the second block, and the second connecting hole 44 is positioned between the third block and the fourth block. As illustrated in FIG. 5, when the brewing device 100 is in the second position state, the main portion 51 abuts against the fixing member 31, a user may easily and accurately view, with the naked-eyes, whether the beverage package fixed to the locking member 50 is aligned with the receiving chamber 311, such that, in the subsequent operations, the beverage package may totally enter the receiving chamber 311. This prevents, in the process of brewing beverage, the brewing device 100 from being jammed due to misalignment of the beverage package, or from beverage leakage. If the beverage package is not aligned with the receiving chamber 311, by adjusting the position of the beverage package, the beverage package may be aligned with the receiving chamber 311.

By continuously pressing the other end of the handle 61, the sliding member 40 may continuously move towards the fixing member 31. Suffering from a resisting effect of the fixing member 31, the locking member 50 may not synchronously moves with the sliding member 40. The first block on the first elastic sheet 54 and the third block on the second elastic sheet 55 suffer from pressing by the sliding member 40. The suspended end of the first elastic sheet 54 moves towards the first connecting bar 52, such that the first block passes through the first connecting hole 43. The suspended end of the second elastic sheet 55 moves towards the second connecting bar 53, such that the third block passes through the second connecting hole 44. Based on the above process, the sliding member 40 gradually approaches the locking member 50 until the sliding member 40 abuts against the locking member 50.

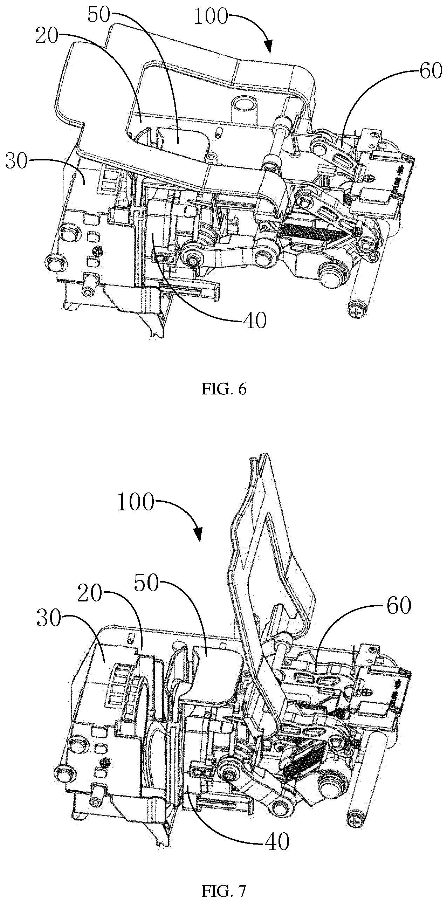

As illustrated in FIG. 6, when the sliding member 40 abuts against the locking member 50, the brewing device 100 transitions from the second position state to the third position state. A resisting portion 41 may push the beverage package into the receiving chamber 311, and pass through the through hole 511 to abut against the receiving chamber 311, such that the receiving chamber 311 is defined as a sealed space. During this process, the lancets 411 of the resisting portion 41 may pierce the beverage package, and water starts flowing from a water outlet to mix with the powder or the solvent in the beverage package, and then the beverage is prepared.

As illustrated in FIG. 7, when the brewing process is completed, by pulling the handle 61, the brewing device 100 transitions from the third position state to the fourth position state. When the locking member 50 is separated from the fixing member 31, the pushing plate 32 may push out the used beverage package from the receiving chamber 311, such that the beverage package naturally falls off.

The brewing device 100 according to the embodiment of the present invention may be applied to a beverage preparation machine. The brewing device 100 includes: a first mounting plate; a second mounting plate; a fixing assembly, fixed between the first mounting plate and the second mounting plate, the fixing assembly comprising a fixing member and the fixing member defining a receiving chamber configured to receive a beverage package; a sliding member, mounted between the first mounting plate and the second mounting plate, the sliding member being slidable relative to the fixing member, the sliding member being provided with a first connecting hole; a driving assembly, connected to the first mounting plate and the second mounting plate, and the sliding member respectively, and configured to drive the sliding member to slide; and a locking member, including a main portion and a first connecting bar, and a first elastic sheet; wherein the main portion is provided with a groove configured to lock the beverage package, one end of the first connecting bar is fixed to the main portion, one end of the first elastic sheet is fixedly connected to the first connecting bar and the other end of the first elastic sheet is suspended, the other end of the first elastic sheet is provided with a first block and a second block, and the first connecting bar and the first elastic sheet pass through the first connecting hole; when the brewing device is in a first position state, the first connecting hole is positioned between the first block and the second block, a spacing is defined between the main portion and the sliding member, and a spacing is defined between the main portion and the fixing member; when the brewing device is in a second position state, the first connecting hole is positioned between the first block and the second block, a spacing is defined between the main portion and the sliding member, and the main portion abuts against the fixing member; and when the brewing device is in the third position state, the first connecting hole is positioned between the first block and the main portion, the main portion abuts against the sliding member, and the main portion abuts against the fixing member. With such configurations, the first block and the second block may enable the brewing device to be in a first position state, a second position state, and a third position state. In this way, it may be ensured that the beverage package accurately enters the receiving chamber, such that, in the process of brewing beverage, the case where the brewing device is jammed due to misalignment of the beverage package and thus beverage leakage is caused is avoided.

It should be noted that the specification and drawings of the present invention illustrate preferred embodiments of the present invention. However, the present invention may be implemented in different manners, and is not limited to the embodiments described in the specification. The embodiments described are not intended to limit the present invention, but are directed to rendering a thorough and comprehensive understanding of the disclosure of the present invention. In addition, the above described technical feature may incorporate and combine with each other to derive various embodiments not illustrated in the above specification, and such derived embodiments shall all be deemed as falling within the scope of the disclosure defined by the appended claims. Further, a person skilled in the art may make improvements or variations according to the above description, and such improvements or variations shall all fall within the protection scope as defined by the claims of the present invention.

## Claims

1. A brewing device (100) for a beverage preparation machine, **characterized by** comprising:
a first mounting plate (10);
a second mounting plate (20);
a fixing assembly (30), fixed between the first mounting plate (10) and the second mounting plate (20), the fixing assembly comprising a fixing member (31) and the fixing member (31) defining a receiving chamber (311) configured to receive a beverage package;
a sliding member (40), mounted between the first mounting plate (10) and the second mounting plate (20), the sliding member (40) being slidable relative to the fixing member (30), the sliding member (40) defining a first connecting hole (43);
a driving assembly (60), connected to the first mounting plate (10) and the second mounting plate (20), and the sliding member (40) respectively, and configured to drive the sliding member (40) to slide;
a locking member (50), comprising a main portion (51) and a first connecting bar (52), and a first elastic sheet (54); wherein the main portion (51) is provided with a groove (512) configured to lock the beverage package, one end of the first connecting bar (52) is fixed to the main portion (51), one end of the first elastic sheet (54) is fixedly connected to the first connecting bar (52) and the other end of the first elastic sheet (54) is suspended in the air, the other end of the first elastic sheet (54) is provided with a first block and a second block, and the first connecting bar (52) and the first elastic sheet (54) pass through the first connecting hole (43); when the brewing device (100) is in a first position state, the first connecting hole (43) is positioned between the first block and the second block, a spacing is defined between the main portion (51) and the sliding member (40), and a spacing is defined between the main portion (51) and the fixing member (31); when the brewing device (100) is in a second position state, the first connecting hole (43) is positioned between the first block and the second block, a spacing is defined between the main portion (51) and the sliding member (40), and the main portion (51) abuts against the fixing member (31); and when the brewing device (100) is in the third position state, the first connecting hole (43) is positioned between the first block and the main portion (51), the main portion (51) abuts against the sliding member (40), and the main portion (51) abuts against the fixing member (31).

2. The brewing device (100) according to claim 1, **characterized in that** the fixing assembly (30) further comprises a pushing plate (32), the pushing plate (32) being arranged in the receiving chamber (311) and positioned at a bottom of the receiving chamber (311), and configured to push used beverage package out of the receiving chamber (311).

3. The brewing device (100) according to claim 1, **characterized in that**
one end of the sliding member (40) is provided with an abutting portion (41) matching with the receiving chamber (311), the abutting portion (41) comprising a plurality of lancets (411) configured to pierce the beverage package, a water outlet, and a sealing portion (412) configured to seal the receiving chamber (311), the sealing portion being in an annular shape and surrounding the plurality of lancets (411).

4. The brewing device (100) according to claim 3, **characterized in that**
a middle portion of the first mounting plate (10) defines a first sliding groove (11);
a middle portion of the second mounting plate (20) defines a second sliding groove; and
the other end of the sliding member (40) is provided with a connecting shaft (42), two connecting shafts (42) being provided and respectively arranged on left and right sides of the sliding member (40), the two connecting shafts (42) being respectively embedded into the first sliding groove (11) and the second sliding groove, and the connecting shaft (42) being slidable in the first sliding groove (11) or the second sliding groove.

5. The brewing device (100) according to claim 1, **characterized in that**
a side of the first block facing towards the main portion (51) and a side of the first block distal from the main portion (51) are both provided with a bevel surface, and a side of the second block distal from the main portion (51) is provided with a bevel surface.

6. The brewing device (100) according to claim 5, **characterized in that**
the sliding member (40) further defines a second connecting hole (44); and
the locking member (50) further comprises a second connecting bar (53) and a second elastic sheet (55); wherein one end of the second connecting bar (53) is fixed to the main portion (51), one end of the second elastic sheet (55) is fixedly connected to the second connecting bar (53) and the other end of the second elastic sheet (55) is suspended, the other end of the second elastic sheet (55) is provided with a third block and a fourth block, and the second connecting bar (53) and the second elastic sheet (55) pass through the second connecting hole (44); when the brewing device (100) is in the first position state, the first connecting hole (43) is positioned between the third block and the fourth block, a spacing is defined between the main portion (51) and the sliding member (40), and a spacing is defined between the main portion (51) and the fixing member (31); when the brewing device (100) is in the second position state, the first connecting hole (43) is positioned between the third block and the fourth block, a spacing is defined between the main portion (51) and the sliding member (40), and the main portion (51) abuts against the fixing member (31); and when the brewing device (100) is in the third position state, the second connecting hole (44) is positioned between the third block and the main portion (51), the main portion (51) abuts against the sliding member (40), and the main portion (51) abuts against the fixing member (31).

7. The brewing device (100) according to claim 6, **characterized in that**
the other end of the second elastic sheet (55) is provided with a third block and a fourth block, a side of the third block facing towards the main portion (51) and a side of the third block distal from the main portion (51) are both provided with a bevel surface; and
a side of the fourth block distal from the main portion (51) is provided with a bevel surface.

8. The brewing device (100) according to claim 1, **characterized in that**
the driving assembly (60) comprises a handle (61) and a connecting rod mechanism (62), the connecting rod mechanism (62) being connected between the handle (61) and the sliding member (40); wherein when being swung, the handle (61) drives, by the connecting rod mechanism (62), the sliding member (40) to undergo a linear reciprocating movement.

9. The brewing device (100) according to claim 8, **characterized in that**
the connecting rod mechanism (62) comprises a first connecting rod (621), a second connecting rod (622), a third connecting rod (623), and an elastic member (624), one end of the first connecting rod (621) being hinged to a first hinge point and the other end of the first connecting rod (621) being hinged to one end of the second connecting rod (622), a middle portion of the second connecting rod (622) being hinged to the first mounting plate (10) and the other end of the second connecting rod (622) being hinged to one end of the third connecting rod (623), the other end of the third connecting rod (623) being hinged to a connecting shaft (42) on the sliding member (40), and one end of the elastic member (624) being fixedly connected to the first connecting rod (621) and the other end of the elastic member (624) being fixedly connected to the second connecting rod (622).

10. A beverage preparation machine, **characterized by** comprising:
the brewing device (100) as defined in any one of claims 1 to 9.

## Patentansprüche

1. Brühvorrichtung (100) für eine Getränkezubereitungsmaschine, **dadurch gekennzeichnet, dass** sie umfasst:
eine erste Befestigungsplatte (10);
eine zweite Befestigungsplatte (20);
eine Befestigungsbaugruppe (30), die zwischen der ersten Befestigungsplatte (10) und der zweiten Befestigungsplatte (20) befestigt ist, wobei die Befestigungsbaugruppe ein Befestigungselement (31) umfasst und das Befestigungselement (31) eine Aufnahmekammer (311) definiert, die zur Aufnahme einer Getränkeverpackung konfiguriert ist;
ein Gleitelement (40), das zwischen der ersten Befestigungsplatte (10) und der zweiten Befestigungsplatte (20) angebracht ist, wobei das Gleitelement (40) relativ zu dem Befestigungsbaugruppe (30) verschiebbar ist und das Gleitelement (40) ein erstes Verbindungsloch (43) bildet;
eine Antriebsbaugruppe (60), die mit der ersten Befestigungsplatte (10) und der zweiten Befestigungsplatte (20) bzw. dem Gleitelement (40) verbunden ist und so konfiguriert ist, dass sie das Gleitelement (40) zum Gleiten bringt;
ein Verriegelungselement (50), das einen Hauptabschnitt (51) und eine erste Verbindungsstange (52) sowie eine erste elastische Folie (54) umfasst; wobei der Hauptabschnitt (51) mit einer Nut (512) versehen ist, die zum Verriegeln der Getränkeverpackung konfiguriert ist, ein Ende der ersten Verbindungsstange (52) an dem Hauptabschnitt (51) befestigt ist, ein Ende der ersten elastischen Folie (54) fest mit der ersten Verbindungsstange (52) verbunden ist und das andere Ende der ersten elastischen Folie (54) in der Luft hängt, das andere Ende der ersten elastischen Folie (54) mit einem ersten Block und einem zweiten Block versehen ist und die erste Verbindungsstange (52) und die erste elastische Folie (54) durch das erste Verbindungsloch (43) geführt werden; wenn sich die Brühvorrichtung (100) in einem ersten Positionszustand befindet, das erste Verbindungsloch (43) zwischen dem ersten Block und dem zweiten Block positioniert ist, ein Abstand zwischen dem Hauptabschnitt (51) und dem Gleitelement (40) definiert ist und ein Abstand zwischen dem Hauptabschnitt (51) und dem Befestigungselement (31) definiert ist; wenn sich die Brühvorrichtung (100) in einem zweiten Positionszustand befindet, das erste Verbindungsloch (43) zwischen dem ersten Block und dem zweiten Block positioniert ist, ein Abstand zwischen dem Hauptabschnitt (51) und dem Gleitelement (40) definiert ist und der Hauptabschnitt (51) gegen das Befestigungselement (31) stößt; und wenn sich die Brüheinrichtung (100) im Zustand der dritten Position befindet, ist das erste Verbindungsloch (43) zwischen dem ersten Block und dem Hauptabschnitt (51) positioniert, der Hauptabschnitt (51) stößt an das Gleitelement (40), und der Hauptabschnitt (51) stößt an das Befestigungselement (31).

2. Die Brühvorrichtung (100) nach Anspruch 1, **dadurch gekennzeichnet, dass**
die Befestigungsbaugruppe (30) ferner eine Schubplatte (32) umfasst, wobei die Schubplatte (32) in der Aufnahmekammer (311) angeordnet und an einem Boden der Aufnahmekammer (311) positioniert ist und so konfiguriert ist, dass sie gebrauchte Getränkeverpackungen aus der Aufnahmekammer (311) schiebt.

3. Die Brühvorrichtung (100) nach Anspruch 1, **dadurch gekennzeichnet, dass**
ein Ende des Gleitelements (40) mit einem Anschlagabschnitt (41) versehen ist, der mit der Aufnahmekammer (311) zusammenpasst, wobei der Anschlagabschnitt (41) eine Vielzahl von Lanzetten (411), die so konfiguriert sind, dass sie die Getränkeverpackung durchstechen, einen Wasserauslass und einen Dichtungsabschnitt (412) umfasst, der so konfiguriert ist, dass er die Aufnahmekammer (311) abdichtet, wobei der Dichtungsabschnitt eine ringförmige Form aufweist und die Vielzahl von Lanzetten (411) umgibt.

4. Die Brühvorrichtung (100) nach Anspruch 3, **dadurch gekennzeichnet, dass**
ein mittlerer Abschnitt der ersten Befestigungsplatte (10) eine erste Gleitrille (11) definiert,
ein Mittelteil der zweiten Befestigungsplatte (20) eine zweite Gleitrille definiert; und
das andere Ende des Gleitelements (40) mit einer Verbindungswelle (42) versehen ist, wobei zwei Verbindungswellen (42) vorgesehen und jeweils auf der linken und rechten Seite des Gleitelements (40) angeordnet sind, wobei die beiden Verbindungswellen (42) jeweils in die erste Gleitrille (11) und die zweite Gleitrille eingebettet sind und die Verbindungswelle (42) in der ersten Gleitrille (11) oder der zweiten Gleitrille verschiebbar ist.

5. Die Brühvorrichtung (100) nach Anspruch 1, **dadurch gekennzeichnet, dass**
eine Seite des ersten Blocks, die dem Hauptabschnitt (51) zugewandt ist, und eine Seite des ersten Blocks, die vom Hauptabschnitt (51) entfernt ist, beide mit einer abgeschrägten Oberfläche versehen sind, und eine Seite des zweiten Blocks, die vom Hauptabschnitt (51) entfernt ist, mit einer abgeschrägten Oberfläche versehen ist.

6. Die Brühvorrichtung (100) nach Anspruch 5, **dadurch gekennzeichnet, dass**
das Gleitelement (40) ferner ein zweites Verbindungsloch (44) definiert; und
das Verriegelungselement (50) ferner eine zweite Verbindungsstange (53) und eine zweite elastische Folie (55) umfasst; wobei ein Ende der zweiten Verbindungsstange (53) an dem Hauptabschnitt (51) befestigt ist, ein Ende der zweiten elastischen Folie (55) fest mit der zweiten Verbindungsstange (53) verbunden ist und das andere Ende der zweiten elastischen Folie (55) aufgehängt ist, das andere Ende der zweiten elastischen Folie (55) mit einem dritten Block und einem vierten Block versehen ist und die zweite Verbindungsstange (53) und die zweite elastische Folie (55) durch das zweite Verbindungsloch (44) verlaufen; wenn sich die Brühvorrichtung (100) im ersten Positionszustand befindet, das erste Verbindungsloch (43) zwischen dem dritten Block und dem vierten Block positioniert ist, ein Abstand zwischen dem Hauptabschnitt (51) und dem Gleitelement (40) definiert ist und ein Abstand zwischen dem Hauptabschnitt (51) und dem Befestigungselement (31) definiert ist; wenn sich die Brühvorrichtung (100) im zweiten Positionszustand befindet, das erste Verbindungsloch (43) zwischen dem dritten Block und dem vierten Block positioniert ist, ein Abstand zwischen dem Hauptabschnitt (51) und dem Gleitelement (40) definiert ist und der Hauptabschnitt (51) an dem Befestigungselement (31) anliegt; und wenn sich die Brüheinrichtung (100) im Zustand der dritten Position befindet, ist das zweite Verbindungsloch (44) zwischen dem dritten Block und dem Hauptabschnitt (51) positioniert, der Hauptabschnitt (51) stößt an das Gleitelement (40), und der Hauptabschnitt (51) stößt an das Befestigungselement (31).

7. Die Brühvorrichtung (100) nach Anspruch 6, **dadurch gekennzeichnet, dass**
das andere Ende der zweiten elastischen Folie (55) mit einem dritten Block und einem vierten Block versehen ist, wobei eine dem Hauptabschnitt (51) zugewandte Seite des dritten Blocks und eine vom Hauptabschnitt (51) entfernte Seite des dritten Blocks beide mit einer abgeschrägten Oberfläche versehen sind; und
eine vom Hauptabschnitt (51) entfernte Seite des vierten Blocks ist mit einer abgeschrägten Oberfläche versehen.

8. Die Brühvorrichtung (100) nach Anspruch 1, **dadurch gekennzeichnet, dass**
die Antriebsbaugruppe (60) einen Griff (61) und einen Pleuelmechanismus (62) umfasst, wobei der Pleuelmechanismus (62) zwischen dem Griff (61) und dem Gleitelement (40) verbunden ist; wobei der Griff (61), wenn er geschwenkt wird, durch den Pleuelmechanismus (62) das Gleitelement (40) in eine lineare Hin- und Herbewegung versetzt.

9. Die Brühvorrichtung (100) nach Anspruch 8, **dadurch gekennzeichnet, dass**
der Pleuelmechanismus (62) einen ersten Pleuel (621), einen zweiten Pleuel (622), einen dritten Pleuel (623) und ein elastisches Element (624) umfasst, wobei ein Ende des ersten Pleuels (621) an einem ersten Scharnierpunkt angelenkt ist und das andere Ende des ersten Pleuels (621) an einem Ende des zweiten Pleuels (622) angelenkt ist, ein mittlerer Abschnitt der zweiten Pleuel (622) an der ersten Montageplatte (10) angelenkt ist und das andere Ende der zweiten Pleuel (622) an einem Ende der dritten Pleuel (623) angelenkt ist, das andere Ende der dritten Pleuel (623) an einer Verbindungswelle (42) an dem Gleitelement (40) angelenkt ist, und ein Ende des elastischen Elements (624) fest mit der ersten Pleuel (621) und das andere Ende des elastischen Elements (624) fest mit der zweiten Pleuel (622) verbunden ist.

10. Eine Maschine zur Zubereitung von Getränken, **dadurch gekennzeichnet, dass** sie umfasst:
die in einem der Ansprüche 1 bis 9 definierte Brühvorrichtung (100).

## Revendications

1. Un dispositif de brassage (100) pour une machine de préparation de boissons, **caractérisé par le fait qu'**il comprend :
une première plaque de montage (10) ;
une deuxième plaque de montage (20) ;
un ensemble de fixation (30), fixé entre la première plaque de montage (10) et la seconde plaque de montage (20), l'ensemble de fixation comprenant un élément de fixation (31) et l'élément de fixation (31) définissant une chambre de réception (311) configurée pour recevoir un emballage de boisson ;
un élément coulissant (40), monté entre la première plaque de montage (10) et la seconde plaque de montage (20), l'élément coulissant (40) pouvant coulisser par rapport à l'élément de fixation (30), l'élément coulissant (40) définissant un premier trou de connexion (43) ;
un ensemble d'entraînement (60), relié à la première plaque de montage (10) et à la deuxième plaque de montage (20), et à l'élément coulissant (40) respectivement, et configuré pour entraîner l'élément coulissant (40) à glisser ;
un élément de verrouillage (50), comprenant une partie principale (51) et une première barre de connexion (52), et une première feuille élastique (54) ; dans lequel la partie principale (51) est pourvue d'une rainure (512) configurée pour verrouiller l'emballage de la boisson, une extrémité de la première barre de connexion (52) est fixée à la partie principale (51), une extrémité de la première feuille élastique (54) est reliée de manière fixe à la première barre de connexion (52) et l'autre extrémité de la première feuille élastique (54) est suspendue dans l'air, l'autre extrémité de la première feuille élastique (54) est pourvue d'un premier bloc et d'un second bloc, et la première barre de connexion (52) et la première feuille élastique (54) passent à travers le premier trou de connexion (43) ; lorsque le dispositif de brassage (100) est dans une première position, le premier trou de connexion (43) est positionné entre le premier bloc et le second bloc, un espace est défini entre la partie principale (51) et l'élément coulissant (40), et un espace est défini entre la partie principale (51) et l'élément de fixation (31) ; lorsque le dispositif de brassage (100) est dans une deuxième position, le premier trou de connexion (43) est positionné entre le premier bloc et le deuxième bloc, un espace est défini entre la partie principale (51) et l'élément coulissant (40), et la partie principale (51) vient en butée contre l'élément de fixation (31) ; et lorsque le dispositif de brassage (100) est dans la troisième position, le premier trou de connexion (43) est positionné entre le premier bloc et la partie principale (51), la partie principale (51) vient en butée contre l'élément coulissant (40), et la partie principale (51) vient en butée contre l'élément de fixation (31).

2. Le dispositif de brassage (100) selon la revendication 1, **caractérisé par le fait que**
l'ensemble de fixation (30) comprend en outre une plaque de poussée (32), la plaque de poussée (32) étant disposée dans la chambre de réception (311) et positionnée au fond de la chambre de réception (311) et configurée pour pousser l'emballage de boisson usagée hors de la chambre de réception (311).

3. Le dispositif de brassage (100) selon la revendication 1, **caractérisé par le fait que**
une extrémité de l'élément coulissant (40) est pourvue d'une partie de butée (41) correspondant à la chambre de réception (311), la partie de butée (41) comprenant une pluralité de lancettes (411) configurées pour percer l'emballage de la boisson, une sortie d'eau et une partie d'étanchéité (412) configurée pour sceller la chambre de réception (311), la partie d'étanchéité étant de forme annulaire et entourant la pluralité de lancettes (411).

4. Le dispositif de brassage (100) selon la revendication 3, **caractérisé par le fait que**
une partie centrale de la première plaque de montage (10) définit une première rainure de glissement (11) ;
une partie centrale de la seconde plaque de montage (20) définit une seconde rainure de glissement ; et
l'autre extrémité de l'élément coulissant (40) est pourvue d'un arbre de liaison (42), deux arbres de liaison (42) étant prévus et disposés respectivement sur les côtés gauche et droit de l'élément coulissant (40), les deux arbres de liaison (42) étant respectivement encastrés dans la première rainure de glissement (11) et la seconde rainure de glissement, et l'arbre de liaison (42) pouvant coulisser dans la première rainure de glissement (11) ou dans la seconde rainure de glissement.

5. Le dispositif de brassage (100) selon la revendication 1, **caractérisé par le fait que**
un côté du premier bloc tourné vers la partie principale (51) et un côté du premier bloc éloigné de la partie principale (51) sont tous deux pourvus d'une surface en biseau, et un côté du second bloc éloigné de la partie principale (51) est pourvu d'une surface en biseau.

6. Le dispositif de brassage (100) selon la revendication 5, **caractérisé par le fait que**
l'élément coulissant (40) définit en outre un second trou de connexion (44) ; et
l'élément de verrouillage (50) comprend en outre une deuxième barre de connexion (53) et une deuxième feuille élastique (55) ; une extrémité de la deuxième barre de connexion (53) est fixée à la partie principale (51), une extrémité de la deuxième feuille élastique (55) est reliée de manière fixe à la deuxième barre de connexion (53) et l'autre extrémité de la deuxième feuille élastique (55) est suspendue, l'autre extrémité de la deuxième feuille élastique (55) est pourvue d'un troisième bloc et d'un quatrième bloc, et la deuxième barre de connexion (53) et la deuxième feuille élastique (55) passent à travers le deuxième trou de connexion (44) ; lorsque le dispositif de brassage (100) se trouve dans la première position, le premier trou de connexion (43) est positionné entre le troisième bloc et le quatrième bloc, un espace est défini entre la partie principale (51) et l'élément coulissant (40), et un espace est défini entre la partie principale (51) et l'élément de fixation (31) ; lorsque le dispositif de brassage (100) se trouve dans la deuxième position, le premier trou de connexion (43) est positionné entre le troisième bloc et le quatrième bloc, un espace est défini entre la partie principale (51) et l'élément coulissant (40), et la partie principale (51) vient en butée contre l'élément de fixation (31) ; et lorsque le dispositif de brassage (100) est dans la troisième position, le deuxième trou de connexion (44) est positionné entre le troisième bloc et la partie principale (51), la partie principale (51) vient en butée contre l'élément coulissant (40), et la partie principale (51) vient en butée contre l'élément de fixation (31).

7. Le dispositif de brassage (100) selon la revendication 6, **caractérisé par le fait que**
l'autre extrémité de la deuxième feuille élastique (55) est pourvue d'un troisième bloc et d'un quatrième bloc, un côté du troisième bloc orienté vers la partie principale (51) et un côté du troisième bloc éloigné de la partie principale (51) étant tous deux pourvus d'une surface en biseau ; et
une face du quatrième bloc distale de la partie principale (51) est pourvue d'une surface en biseau.

8. Le dispositif de brassage (100) selon la revendication 1, **caractérisé par le fait que**
l'ensemble d'entraînement (60) comprend une poignée (61) et un mécanisme de bielle (62), le mécanisme de bielle (62) étant relié entre la poignée (61) et l'élément coulissant (40) ; lorsqu'elle est pivotée, la poignée (61) entraîne, par le mécanisme de bielle (62), l'élément coulissant (40) pour qu'il subisse un mouvement de va-et-vient linéaire.

9. Le dispositif de brassage (100) selon la revendication 8, **caractérisé par le fait que**
le mécanisme de bielle (62) comprend une première bielle (621), une deuxième bielle (622), une troisième bielle (623) et un élément élastique (624), une extrémité de la première bielle (621) étant articulée à un premier point d'articulation et l'autre extrémité de la première bielle (621) étant articulée à une extrémité de la deuxième bielle (622), une partie centrale de la deuxième bielle (622) est articulée à la première plaque de montage (10) et l'autre extrémité de la deuxième bielle (622) est articulée à une extrémité de la troisième bielle (623), l'autre extrémité de la troisième bielle (623) étant articulée à un arbre de liaison (42) sur l'élément coulissant (40), et une extrémité de l'élément élastique (624) étant reliée de manière fixe à la première bielle (621) et l'autre extrémité de l'élément élastique (624) étant reliée de manière fixe à la deuxième bielle (622).

10. Une machine de préparation de boissons, **caractérisée par** comprenant :
le dispositif de brassage (100) tel que défini dans l'une quelconque des revendications 1 à 9.
